# EUROPEAN PATENT SPECIFICATION

(11) **EP 3 275 784 B1**
(45) Date of publication and mention of the grant of the patent: **30.10.2019**
(21) Application number: 15886155.9
(22) Date of filing: 25.03.2015
(51) Int. Cl.: B64C 39/02

(54) **REMOTELY CONTROLLED VERTICAL TAKE-OFF DEVICE**
FERNGESTEUERTE SENKRECHTSTARTVORRICHTUNG
DISPOSITIF À DÉCOLLAGE VERTICAL COMMANDÉ À DISTANCE

(43) Date of publication of application: 31.01.2018
(73) Proprietor: Arborea Intellbird S.L., 37185 Villamayor (Salamanca) (ES)
(72) Inventor: BERNABEU GONZALEZ, Carlos, E-37185 Villamayor (Salamanca) (ES); TORRES CEREIJO, Alberto, E-37185 Villamayor (Salamanca) (ES); OROZCO RIOS, Oscar, E-37185 Villamayor (Salamanca) (ES)
(74) Representative: Hernández Hernández, Carlos
(86) International application number: PCT/ES2015/070221
(87) International publication number: WO 2016/151154

(56) References cited:
- WO-A1-2014/059549
- WO-A1-2014/059549
- CN-U- 203 601 563
- DE-A1-102013 206 478
- DE-U-202013 102 796
- US-A1- 2009 283 629
- US-A1- 2014 061 376
- US-A1- 2014 061 376

## Description

### Technical Field

This invention belongs to the field of vertical take-off devices with remote control, also known as RPAS (Remotely Piloted Aircraft Systems). Specifically, the subject of this patent is a multirotor or multihelicopter device, capable of being configured with different types of propulsion arms.

Multirotor RPAS comprise two or more propulsion arms, protruding from a body, which body normally takes center position with respect to the propulsion arms. Propulsion arms can be placed in different positions with respect to the body. Their axes of symmetry, profiles and geometries can be designed in a variety of ways. Propulsion arms incorporate engines, said engines actuating corresponding propellers.

A propulsion arm may have one or several engines and in the latter case, engines may be placed coaxially or in other ways. Normally, the RPAS' body houses a control unit, which control unit comprises control means of the engines installed in the several propulsion arms. It is also possible that each propulsion arm contains its own control unit, which would control the engine or engines located in that particular propulsion arm. The control unit or control units respond by way of a remote control to the instructions from the RPAS operator.

In the proposed invention, the multirotor RPAS admits different configurations to meet different requirements, these requirements being especially the weather conditions in which the RPAS has to operate. To this end, aerial propulsion arms can be replaced quickly and easily by other aerial propulsion arms of different constructive or functional features, the RPAS comprising also predetermined control means which operate according to the combination of propulsion arms which is at any given time installed in the RPAS.

### Background Art

RPAS are designed taking into account their conditions of use: wind conditions, payload, required flight autonomy. To this end, several interrelated factors must be taken into account, mostly engine power, arms' length and propellers' length, rotational speed and angle of attack. Thus, a device with a high rotational speed and a short arm will be very stable against the wind but its energy consumption will be high and therefore it will have less flight autonomy. An engine with lower rotational speed and a longer arm will be more lift-efficient and therefore its consumption will be lower, which means a higher autonomy, but it will be less stable against strong winds.

RPAS known in the state of the art are designed with a particular configuration of their propulsion arms, engine power and propellers, their means of control being programmed to make the device work under such configuration. The person operating the device cannot alter the particular configuration of the device, because such alteration (for instance, change to propellers of a different length or angle of attack) would prevent either the functioning of the device, or its optimal performance.

The above-described circumstance presents an important disadvantage: if wind conditions in the place and date scheduled for operation cannot be foreseen, device operator will have to carry several differently-configured devices to the place of operation, which is logistically inconvenient, in order to be able to choose on the spot the most appropriate device to the reigning conditions.

Another disadvantage of known devices is its payload, related for instance to the sensors installed in the device for data-capture purposes. Sometimes it is necessary within the same operation to use first a sensor weighing just a few grams and a much heavier photo camera afterwards; which entails a big payload variation. An RPAS may be designed to deal with such great payload variation, but the required engine, propeller and arms combination would not be optimal and would impair the performance of the device.

This invention proposes a multirotor RPAS which can work efficiently under different weather conditions, these conditions being particularly the strength and speed of the wind; and under variable payloads; because the operator will be able to replace one, some or all of the device's aerial propulsion arms by other aerial propulsion arms with different features, the means of control being programmed to allow functioning of the device with different combinations of propulsion arms and the device being provided with means to identify the combination of propulsion arms chosen by the operator.

WO 2014/059549 A1 (AERYON LABS INC) 24 April 2014 (24.04.2014), at [0007] describes a multirotor RPAS device whose propulsion arms can be assembled and disassembled, however replacement of these arms by different arms is not disclosed and for this reason there is no way to adapt the means of control to the replaced propulsion arms.

US 2014/0061376 A1 (FISHER ET AL) 6 March 2014 (06/03/2014) discloses a Remotely Piloted Aircraft System (RPAS) comprising at least two sets (considering replacement parts [0060]) of aerial propulsion arms (103), the at least two sets having the same functional or constructive features. In contrast, the RPAS which is the subject matter of the present invention comprises at least two sets of aerial propulsion arms with different functional or constructive features, the RPAS being capable to operate with either of them. This feature means that the operator can easily adapt the RPAS to changing weather conditions or to different payloads without the need to use a different RPAS.

### Summary of invention

The object of this invention is a RPAS whose aerial propulsion arms (one, several or all of them) can be replaced by other ones of different functional or constructive features, those different features comprising the length, their design, their location with respect to the body of the RPAS, their propellers' dimension an angle of attack; the engines' number, power and rotational speed. The replacement of one, several or all of the aerial propulsion arms by others with different features results in a different combination of propulsion arms installed in the RPAS. Such an RPAS is defined by independent claim 1.

The RPAS houses at least one control unit comprising means of control. The working of the means of control is adapted to the functional or constructive features of the aerial propulsion arms which at any given time may be installed in the device. The at least one control unit comprises at least one microcontroller programmed to allow the device to function with different predetermined combinations of propulsion arms. Specifically, each combination of propulsion arms corresponds to one programming of the microcontroller, thus the RPAS device will be able to function with as many different combinations of propulsion arms as individual programs have previously been introduced in the microcontroller. Each programming consists of a block of instructions, said blocks of instructions constitute a software which is housed in the microprocessor. Programming parameters are an industry standard.

When the operator replaces the propulsion arms to one of the predetermined combinations, the at least one control unit identifies the new combination of propulsion arms, so that the RPAS device can function with it.

Propulsion arms are connected to the RPAS' body. To allow replacement of the propulsion arms, RPAS' body has connection means, preferably connectors and preferably plugs and on the propulsion arms' free ends there are connection means, preferably connectors and preferably sockets.

Said connectors are provided with electric connection means and with mechanical means for an adequate electric connection, having likewise means of attachment of the connection and safety means to prevent undesired removal of the propulsion arms.

### Brief description of drawings

Fig. 1 represents a plan view of the RPAS.
Fig. 2, a side view of the RPAS.
Figs. 3, 4 and 5, different steps in the process of connecting and fixing a propulsion arm to the RPAS' body.
Figs. 6 and 7, respectively a perspective view and front view of the plug connector.
Fig. 8, a perspective view of the socket connector.
Fig. 9 perspective view of the safety component.
Fig. 10, attachment of the end of the propulsion arm.
Fig. 11, different types of propulsion arms.
Fig. 12, block diagram of control unit and associated means.

### Description of embodiments

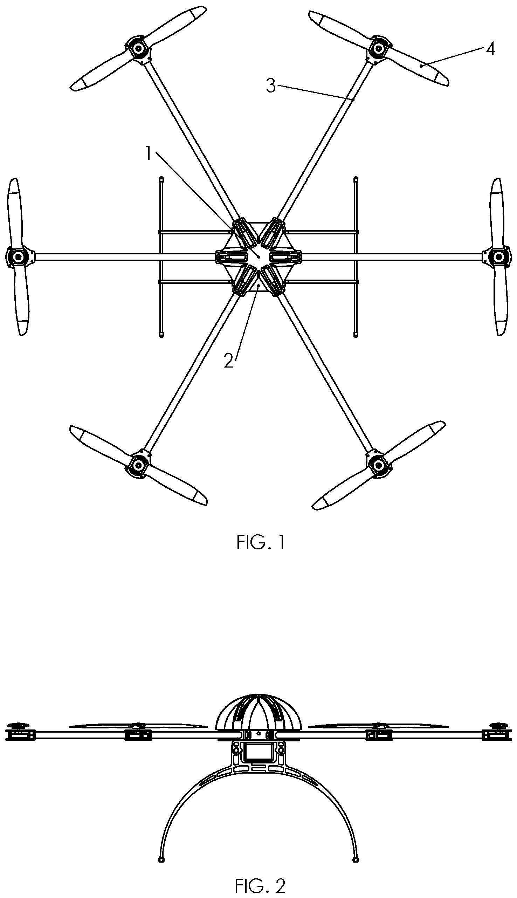

Figures 1 and 2 show a RPAS comprising a control unit (1) housed in a central body (2). Propulsion arms (3) emerge from central body (2). Control unit (1) comprises power supply means and means of control of the propulsion arms. Each propulsion arm (3) comprises at least an engine with at least one propeller (4).

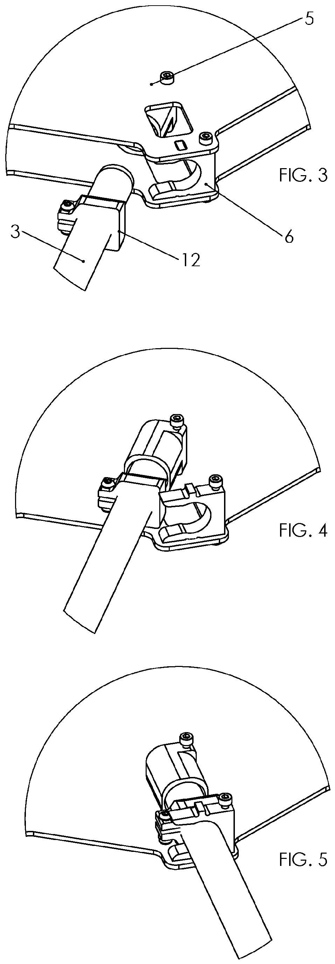

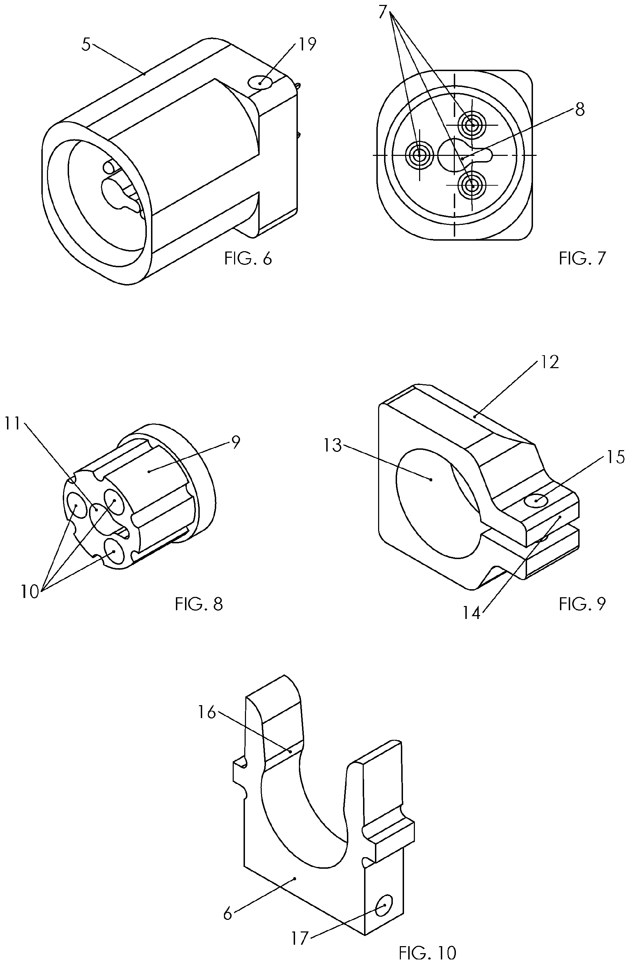

Figures 3 to 5 show the process of connecting a propulsion arm (3). Connection of each propulsion arm (3) to the central body (2) is made by means of connection means comprising: at each connection point, a connector (5), preferably a socket, which rotates with respect a vertical axis, and an element (6) to attach the end of each propulsion arm, and at each free end of each propulsion arm (3), there is a connector (9) (as shown in figure 8), preferably a plug, and a safety stopper (12).

By way of the rotating capacity of the connector (5) plus the attachment element (6) and the safety stopper (12), it is possible to connect and attach securely the propulsion means (3) to the central body (2), avoiding angular and radial displacements of the propulsion arms (3).

Figure 6 shows the rotating socket connector (5) which has a general cylindrical shape, hollow and open at its free end. Inside as shown at figure 7 there are electric connection pins (7) and a protruding element (8) whose particular geometry assures an adequate connection of the propulsion arms. Connector (5) has a vertical perforation (19) which serves as connection and articular pivoting point of the connector (5) in respect of the central body (2).

Figure 8 represents the plug connector (9) in the inside of the propulsion arm (3) having some holes (10) for electric connection and a central perforation (11) whose shape matches the protruding element (8), to secure an adequate electric connection.

Figure 9 shows the safety stopper (12) mounted close to the propulsion arm's (3) free end, said safety stopper having the shape of a flange and comprising a perforation (13) and two free ends (14) with facing perforations (15) for the attachment to the propulsion arm (3). Attachment element (6) takes the approximate shape of a letter "U" with a narrowed entrance (16) and a perforation (17) which goes through said attachment element for the attachment to the central body, as shown in figure 10.

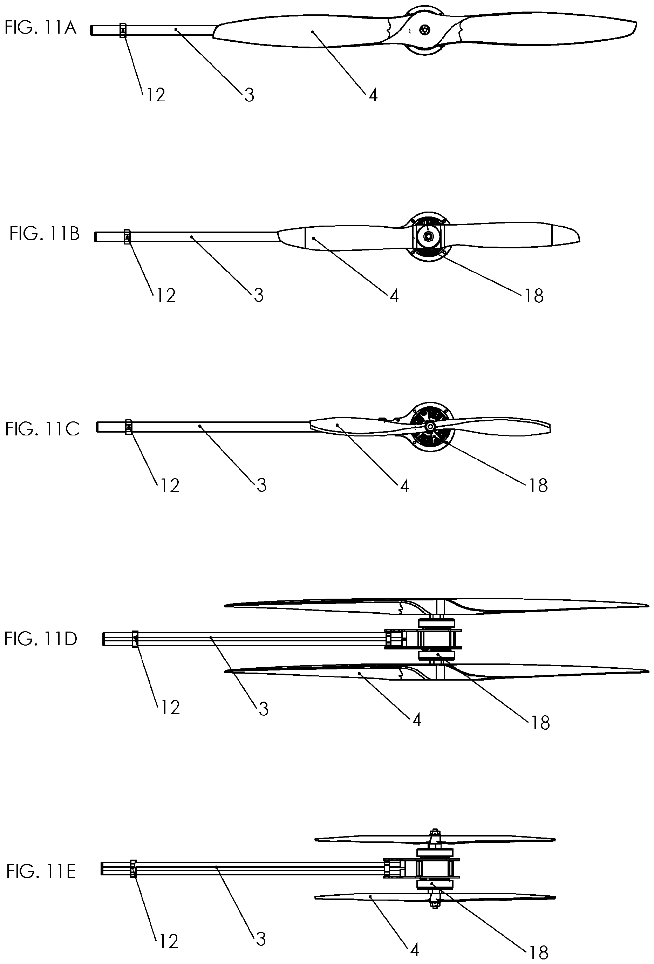

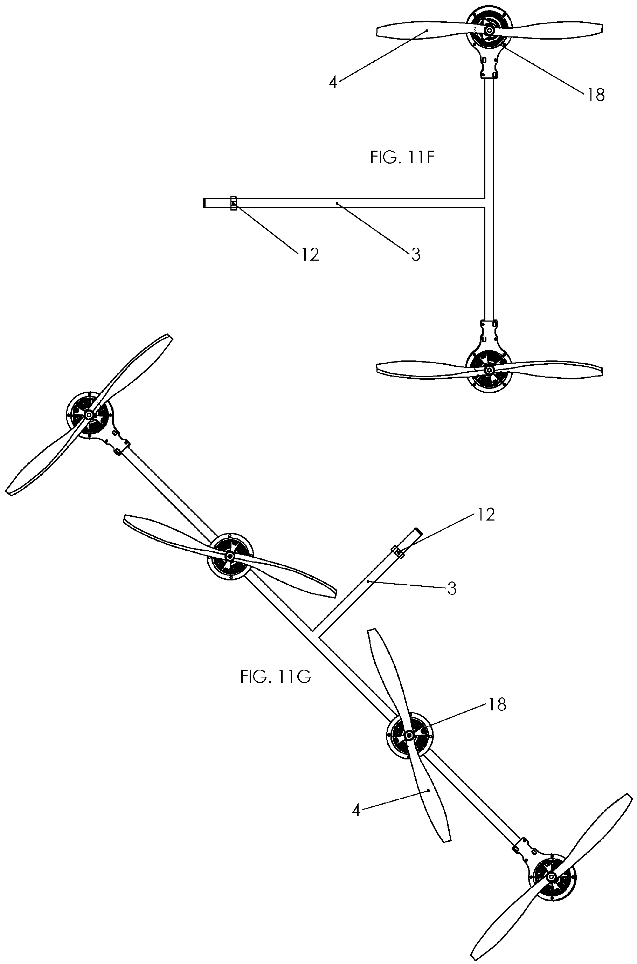

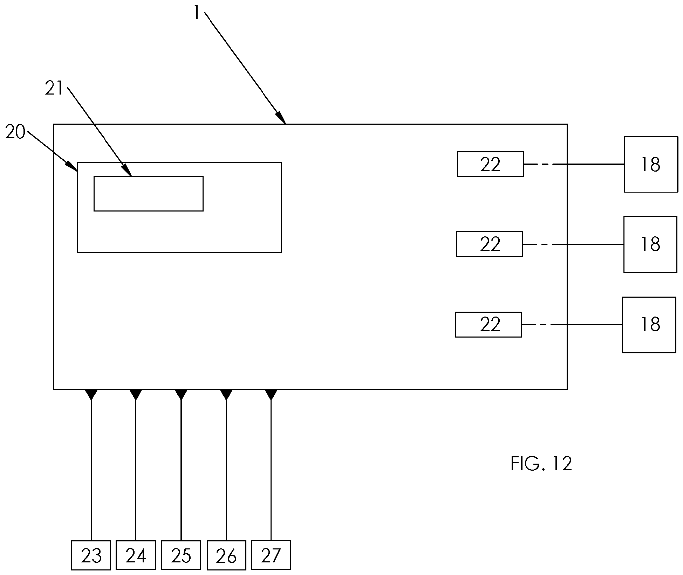

Finally, figures 11A-F show a non-limitative representation of different types of propulsion means (3), each propulsion arm having a different engine (18), with propellers (4) of varied length, design or angle of attack and with propulsion arms (3) of different length. Figure 11A shows a propulsion arm with 21"(53,34 cm) propellers; at figure 11B, propellers' dimensions are 15" (38,10 cm); at figure 11C, 12" (30,48 cm) ; at figure 11D, a propulsion arm with 21"(53,34 cm) coaxial propellers; figure 11E, a propulsion arm with 12" (30,48 cm) coaxial propellers; figure 11F, a propulsion arm with "H" configuration with two engines (18) having 12" (30,48 cm) propellers and figure 11G, propulsion arm with "V" configuration having four engines (18) coupled to 12"(30,48 cm) propellers.

Figure 12 shows a block diagram of the control unit (1), the means which said control unit comprises and the connection of the different sensors and propulsion arms (3). Control unit (1) comprises at least one microcontroller (20) housing a software (21). Said software contains a block of instructions for each combination of propulsion arms which one wishes to install in the RPAS device. Said software transmits instructions to several ESC (Electronic Speed Control) regulation units housed at the control unit (1) in charge of actuating the engines (18), the control unit (1) having as many ESC units as engines there are in the RPAS device. Microcontroller (20) is connected to different types of sensors: gyroscope (23), accelerometer (24), barometer (25), magnetometer (26) and GPS (27).

When operator changes the set of propulsion arms, the at least one control unit identifies said change, identification which is preferably made in one of the following ways: i) manually, by way of a commutator with predetermined options of propulsion arms' combinations for which the microcontroler's (20) software has been programmed. Operator selects the applicable option in the commutator. Said commutator may be located in the RPAS remote control unit, at earth station or in the RPAS body, ii) automatically, to which end in at least one of the propulsion arms (3), at the end attached to the device of the body, there is a microchip. When the propulsion arm (3) is connected to the body of the device (2), the microchip makes connection with the microcontroller (20), which in this way identifies the type of propulsion arm or the combination of propulsion arms to which said microchip is associated and accordingly changes the applicable block of instructions.

Once the combination of propulsion arms has been identified by any of the above-described means, control unit (1) will run the RPAS device according to the software block of instructions corresponding to the functional or constructive features of the installed propulsion arms.

## Claims

1. Remotely Piloted Aircraft System (RPAS) comprising at least one control unit (1) housing means of control of the RPAS and at least two sets of aerial propulsion arms (3), each one of said aerial propulsion arms (3) comprising one or several engines with associated propellers (4), the RPAS being capable of operating with either of the at least two sets of aerial propulsion arms (3) and each of the RPAS's at least two sets of aerial propulsion arms (3) being removable and replaceable by the RPAS's other set of at least two sets of aerial propulsion arms **characterized in that** (3) the functional or constructive features of each of the RPAS's at least two sets of aerial propulsion arms (3) are different from the functional or constructive features of the other set of the RPAS's at least two sets of aerial propulsion arms (3).

2. Remotely Piloted Aircraft System (RPAS) according to claim 1, **characterized in that** the means of control operate in accordance with the functional or constructive features of the aerial propulsion arms installed in the RPAS at any given time.

3. Remotely Piloted Aircraft System (RPAS) according to claim 1, **characterized in that** the means of control have means to identify the set of aerial propulsion arms installed in the RPAS at any given time.

4. Remotely Piloted Aircraft System (RPAS) according to any of claims 1 to 3, **characterized in that** the control unit (1) includes a software (21) which comprises as many blocks of instructions as sets of aerial propulsion arms can be installed in the RPAS.

5. Remotely Piloted Aircraft System (RPAS) according to claim 1, **characterized in that** the connection of each aerial propulsion arm (3) to the RPAS (2) is made by connection means comprising: at each connection point, a connector (5) rotating with respect to a vertical axis and an attachment element (6) to attach the end of each aerial propulsion arm; and at each free end of each aerial propulsion arm (3) a connector (9) and a safety stopper (12).

6. Remotely Piloted Aircraft System (RPAS) according to claim 5, **characterized in that** the rotating connector (5) has a cylindrical shape, it is hollow and open at its free end, has electric connection pins inside (7) and a protruding element (8) whose geometry assures an adequate connection of the aerial propulsion arms, said rotating connector (5) having a vertical perforation (19) which serves as connection and articular pivoting point of the connector (5) in respect of the central body (2).

7. Remotely Piloted Aircraft System (RPAS) according to claim 6, **characterized in that** the connector (9) housed inside each aerial propulsion arm (3) has a number of holes (10) for electric connection and a central perforation (11) whose shape matches the protruding element (8).

8. Remotely Piloted Aircraft System (RPAS) according to claim 5, **characterized in that** the safety stopper (12) mounted close to the aerial propulsion arm's (3) free end has the shape of a flange and comprises a perforation (13) and two free ends (14) with facing perforations (15) for the attachment to the aerial propulsion arm (3).

9. Remotely Piloted Aircraft System (RPAS) according to claim 5, **characterized in that** the attachment element (6) takes the approximate shape of a letter "U" with a narrowed entrance (16) and a perforation (17) which goes through said attachment element for the attachment to the central body.

10. Remotely Piloted Aircraft System (RPAS) according to any of the preceding claims, **characterized in that** the means of control identify automatically the set of aerial propulsion arms installed in the RPAS at any given time.

11. Remotely Piloted Aircraft System (RPAS) according to claim 10, **characterized in that** the automatic identification of the set of aerial propulsion arms is made by at least a microchip which is connected to a microcontroller (20) and located in at least one of the aerial propulsion arms.

12. Remotely Piloted Aircraft System (RPAS) according to any of claims 1 to 9, **characterized in that** the identification of the set of aerial propulsion arms installed in the system is carried out manually.

13. Remotely Piloted Aircraft System (RPAS) according to claim 12, **characterized in that** manual identification is carried out by a commutator with predetermined options, each predetermined option corresponding to a different set of aerial propulsion arms for which the microcontroller's (20) software (21) has been programmed.

14. Remotely Piloted Aircraft System (RPAS) according to claim 13, **characterized in that** the commutator is in the control unit (1).

## Patentansprüche

1. Ferngesteuertes Luftfahrtsystem (Remotely Piloted Aircraft System - RPAS), bestehend aus mindestens einer Steuerungseinheit (1), in der Steuerungsmittel für das RPAS untergebracht sind, und mindestens zwei Sätzen Luftantriebsarme (3), wobei jeder dieser Luftantriebsarme (3) einen oder mehrere Motoren mit dazugehörigen Propellern (4) enthält und das RPAS in der Lage ist, mit jedem einzelnen dieser mindestens zwei Luftantriebsarmsätzen (3) zu funktionieren, und wobei jedes dieser mindestens zwei Luftantriebsarmsätze (3) des RPAS entfernbar und durch den anderen Luftantriebsarmsatz des RPAS ersetzbar ist, **gekennzeichnet dadurch, dass** (3) die funktionellen oder baulichen Merkmale jedes der mindestens zwei Luftantriebsarmsätze (3) des RPAS anders als die des anderen der mindestens zwei Luftantriebsarmsätze (3) des RPAS sind.

2. Ferngesteuertes Luftfahrtsystem (Remotely Piloted Aircraft System - RPAS) gemäß Anspruch 1, **gekennzeichnet dadurch, dass** die Steuerungsmittel jederzeit in Übereinstimmung mit den funktionellen oder baulichen Merkmalen der im RPAS installierten Luftantriebsarme betrieben werden können.

3. Ferngesteuertes Luftfahrtsystem (Remotely Piloted Aircraft System - RPAS) gemäß Anspruch 1, **gekennzeichnet dadurch, dass** für die Steuerungsmittel jederzeit die Möglichkeit besteht, den jeweils im RPAS installierten Luftantriebssatz zu identifizieren.

4. Ferngesteuertes Luftfahrtsystem (Remotely Piloted Aircraft System - RPAS) gemäß Ansprüche 1 bis 3, **gekennzeichnet dadurch, dass** in der Steuerungseinheit (1) eine Software (21) enthalten ist, die so viele Anweisungsblöcke umfasst, wie Luftantriebsarmsätze im RPAS installiert werden können.

5. Ferngesteuertes Luftfahrtsystem (Remotely Piloted Aircraft System - RPAS) gemäß Anspruch 1, **gekennzeichnet dadurch, dass** die Verbindung jedes Luftantriebsarms (3) mit dem RPAS (2) durch Anschlusselemente erfolgt, die Folgendes enthalten: an jedem Anschlusspunkt einen Steckverbinder (5), der sich um eine senkrechte Achse dreht, und ein Befestigungselement (6), mit dem das Ende jedes Luftantriebsarms befestigt ist; und an jedem freien Ende jedes Luftantriebsarms (3) einen Steckverbinder (9) und einen Sicherheitsstöpsel (12).

6. Ferngesteuertes Luftfahrtsystem (Remotely Piloted Aircraft System - RPAS) gemäß Anspruch 5, **gekennzeichnet dadurch, dass** der drehende Steckverbinder (5) zylinderförmig, hohl und an seinem freien Ende offen ist, im Inneren elektrische Anschlussstifte (7) enthält und ein vorstehendes Element (8) hat, dessen geometrische Form eine geeignete Verbindung der Luftantriebsarme sicherstellt, wobei der genannte drehende Steckverbinder (5) ein senkrechtes Bohrloch (19) hat, das als Anschluss und Gelenkschwenkpunkt des Steckverbinders (5) bezüglich des mittleren Körpers (2) dient.

7. Ferngesteuertes Luftfahrtsystem (Remotely Piloted Aircraft System - RPAS) gemäß Anspruch 6, **gekennzeichnet dadurch, dass** der Steckverbinder (9), der im Inneren jedes Luftantriebsarms (3) untergebracht ist, eine Anzahl von Löchern (10) für den elektrischen Anschluss hat, ebenso wie ein mittleres Bohrloch (11), dessen Form dem vorstehenden Element (8) entspricht.

8. Ferngesteuertes Luftfahrtsystem (Remotely Piloted Aircraft System - RPAS) gemäß Anspruch 5, **gekennzeichnet dadurch, dass** der Sicherheitsstöpsel (12), der dicht am freien Ende des Luftantriebsarm (3) montiert ist, die Form eines Flansches hat und aus einem Bohrloch (13) und zwei freien Enden (14) mit Bohrlöchern in der Außenschicht (15) zur Befestigung am Luftantriebsarm (3) besteht.

9. Ferngesteuertes Luftfahrtsystem (Remotely Piloted Aircraft System - RPAS) gemäß Anspruch 5, **gekennzeichnet dadurch, dass** das Befestigungselement (6) die geeignete Form eines Buchstaben "U" hat, mit einem verengten Eingang (16) und einem Bohrloch (17), das durch dieses genannte Befestigungselement bis in den mittleren Körper geht.

10. Ferngesteuertes Luftfahrtsystem (Remotely Piloted Aircraft System - RPAS) gemäß irgendeinem der obigen Ansprüche, **gekennzeichnet dadurch, dass** die Steuerungsmittel jederzeit automatisch den im RPAS installierten Satz Luftantriebsarme identifizieren.

11. Ferngesteuertes Luftfahrtsystem (Remotely Piloted Aircraft System - RPAS) gemäß Anspruch 10, **gekennzeichnet dadurch, dass** die automatische Identifizierung des Luftantriebsarmsatzes durch mindestens einen Mikrochip erfolgt, der an eine Mikrosteuerung (20) angeschlossen und sich in mindestens einem der Luftantriebsarme befindet.

12. Ferngesteuertes Luftfahrtsystem (Remotely Piloted Aircraft System - RPAS) gemäß irgendeinem der Ansprüche 1 bis 9, **gekennzeichnet dadurch, dass** die Identifizierung des im System installierten Luftantriebsarmsatzes von Hand durchgeführt wird.

13. Ferngesteuertes Luftfahrtsystem (Remotely Piloted Aircraft System - RPAS) gemäß Anspruch 12, **gekennzeichnet dadurch, dass** die manuelle Identifizierung durch einen Schalter mit vorbestimmten Optionen erfolgt, wobei jede vorbestimmte Option zu einem anderen Luftantriebsarmsatz gehört, für den die Software (21) der Mikrosteuerung (20) programmiert wurde.

14. Ferngesteuertes Luftfahrtsystem (Remotely Piloted Aircraft System - RPAS) gemäß Anspruch 13, **gekennzeichnet dadurch, dass** der Schalter sich in der Steuerungseinheit (1) befindet.

## Revendications

1. Système d'Aéronef Piloté à Distance (RPAS, selon le sigle en anglais) qui comprend au moins un boîtier de commande (1) contenant les moyens de commande du RPAS et au moins deux jeux de bras de propulsion aérienne (3), chacun desdits bras de propulsion aérienne (3) comportant un ou plusieurs moteurs et des hélices associées (4), le RPAS pouvant fonctionner avec l'un desdits au moins deux jeux de bras de propulsion aérienne (3) et chacun desdits au moins deux jeux de bras de propulsion aérienne (3) pouvant être retiré et remplacé par l'autre jeu des au moins deux jeux de bras de propulsion aérienne du RPAS, **caractérisé en ce que** (3) les caractéristiques des fonctions et des composantes de chacun desdits au moins deux jeux de bras de propulsion aérienne (3) du RPAS diffèrent des caractéristiques des fonctions et des composantes de l'autre jeu des au moins deux jeux de bras de propulsion aérienne (3) du RPAS.

2. Système d'Aéronef Piloté à Distance (RPAS) selon la revendication 1 **caractérisé en ce que** les moyens de commande fonctionnent conformément aux caractéristiques des fonctions et des composantes des bras de propulsion aérienne installés dans le RPAS à tout moment.

3. Système d'Aéronef Piloté à Distance (RPAS) selon la revendication 1 **caractérisé en ce que** les moyens de commande ont les moyens d'identifier le jeu de bras de propulsion aérienne installé dans le RPAS à tout moment.

4. Système d'Aéronef Piloté à Distance (RPAS) selon l'une quelconque des revendications 1 à 3 **caractérisé en ce que** le boîtier de commande (1) inclut un logiciel (21) qui comprend autant de blocs d'instructions que de jeux de bras de propulsion aérienne pouvant être installés dans le RPAS.

5. Système d'Aéronef Piloté à Distance (RPAS) selon la revendication 1 **caractérisé en ce que** la connexion de chacun des bras de propulsion aérienne (3) au RPAS (2) est réalisée par des moyens de connexion qui comprennent : à chaque point de connexion, un connecteur (5) rotatif autour de l'axe vertical et un élément d'attache (6) pour fixer l'extrémité de chaque bras de propulsion aérienne ; et à chaque extrémité libre de chacun des bras de propulsion aérienne (3) un connecteur (9) et un dispositif d'arrêt de sécurité (12).

6. Système d'Aéronef Piloté à Distance (RPAS) selon la revendication 5 **caractérisé en ce que** le connecteur rotatif (5) a une forme cylindrique, est creux et ouvert en son extrémité libre, possède des broches électriques de connexion à l'intérieur (7) et un élément en saillie (8) dont la géométrie assure une connexion adéquate avec les bras de propulsion aérienne, ledit connecteur rotatif (5) présentant une perforation verticale (19) qui sert de connexion et de point de pivotement articulaire du connecteur (5) par rapport au corps central (2).

7. Système d'Aéronef Piloté à Distance (RPAS) selon la revendication 6 **caractérisé en ce que** le connecteur (9) logé à l'intérieur de chacun des bras de propulsion aérienne (3) a un certain nombre d'orifices (10) pour la connexion électrique et une perforation centrale (11) dont la forme correspond à l'élément en saillie (8).

8. Système d'Aéronef Piloté à Distance (RPAS) selon la revendication 5 **caractérisé en ce que** le dispositif d'arrêt de sécurité (12) monté à proximité de l'extrémité libre du bras de propulsion aérienne a une forme de bride et comprend une perforation (13) et deux extrémités libres (14) avec des perforations en regard pour son rattachement au bras de propulsion aérienne (3).

9. Système d'Aéronef Piloté à Distance (RPAS) selon la revendication 5 **caractérisé en ce que** l'élément d'attache (6) prend la forme approximative de la lettre « U » avec une entrée rétrécie (16) et une perforation (17) qui traverse ledit élément d'attache pour son rattachement au corps central.

10. Système d'Aéronef Piloté à Distance (RPAS) selon l'une quelconque des revendications précédentes **caractérisé en ce que** les moyens de commande identifient automatiquement le jeu de bras de propulsion aérienne installé dans le RPAS à tout moment.

11. Système d'Aéronef Piloté à Distance (RPAS) selon la revendication 10 **caractérisé en ce que** l'identification automatique du jeu de bras de propulsion aérienne est réalisé par au moins une puce connectée à un microcontrôleur (20) et située dans au moins un des bras de propulsion aérienne.

12. Système d'Aéronef Piloté à Distance (RPAS) selon les revendications 1 à 9 **caractérisé en ce que** l'identification du jeu de bras de propulsion aérienne installé dans le système est effectuée manuellement.

13. Système d'Aéronef Piloté à Distance (RPAS) selon la revendication 12 **caractérisé en ce que** l'identification manuelle est effectuée par un commutateur à options prédéterminées, chacune des options prédéterminées correspondant à un jeu de bras de propulsion aérienne différent pour lequel le logiciel (21) du microcontrôleur (20) a été programmé.

14. Système d'Aéronef Piloté à Distance (RPAS) selon la revendication 13 **caractérisé en ce que** le commutateur se trouve dans le boîtier de commande (1).
